# EUROPEAN PATENT SPECIFICATION

(11) **EP 4 668 001 B1**
(45) Date of publication and mention of the grant of the patent: **21.10.2026**
(21) Application number: 25181099.0
(22) Date of filing: 05.06.2025
(51) Int. Cl.: G02B 27/01, G02B 27/64, G02B 7/182

(54) **ACTUATOR FOR HEAD-UP DISPLAY**
AKTUATOR FÜR HEAD-UP-ANZEIGE
ACTIONNEUR POUR AFFICHAGE TÊTE HAUTE

(30) Priority: 17.06.2024 KR 20240078118
(43) Date of publication of application: 24.12.2025
(73) Proprietor: Hyundai Mobis Co., Ltd., Gangnam-gu Seoul (KR)
(72) Inventor: KIM, Byung Ki, 16931 Yongin-si, Gyeonggi-do (KR)
(74) Representative: Jung, Minkyu

(56) References cited:
- WO-A1-2020/153475
- US-A1- 2021 364 780

## Description

### BACKGROUND

### 1. Field

The present disclosure relates to an actuator for a head-up display driving module, and more particularly, to a vibration absorbing apparatus of an actuator for a head-up display.

### 2. Description of the Related Art

The content described below merely provides background information related to the present disclosure and does not constitute the related art.

A head-up display is a device that displays an image showing vehicle speed, remaining fuel, navigation information, etc. on a windshield that forms a front window of a vehicle. The head-up display is generally configured to present display information projected from a picture generation unit onto a windshield.

The head-up display rotates an aspheric mirror using a motor. As the revolutions per minute (RPM) of the motor increases, the vibration of the motor, i.e., the acceleration of the motor, increases. A conventional head-up display discloses the technology of suppressing the vibration of the motor by using a dynamic vibration absorber made of metal such as brass.

However, metal dynamic vibration absorbers such as brass ones are more massive than such members as the motor and a motor mount for fixing the motor. This can increase the manufacturing cost of an actuator for a head-up display and increase the total weight of the actuator for the head-up display. A problem with head-up displays according to the conventional art is that, if the motor is run at a high RPM, the vibration of the motor cannot be damped, and, as a result, noise is generated. US 2021/0364780 A1 discloses an actuator module of a vehicle head-up display including a driving unit including a driving motor and a lead screw forming a driving axis of the driving motor, a driving transmission unit of which upward and downward movement is controlled only within a section preset by the driving unit, a link unit which is disposed between and connected to an aspheric mirror and the driving transmission unit and adjusts a rotational angle of the aspheric mirror according to the upward and downward movement of the driving transmission unit, a motor mount which is connected to one side of the driving unit and has a space in which an adjacent component and a plurality of cables are installable, and an elastic part which is disposed between and connected to the driving unit and the driving transmission unit and provides an elastic force.

### SUMMARY

An embodiment of the present disclosure provides an actuator for a head-up display, that is capable of reducing the manufacturing cost by using a vibration damping part and a cantilever type dynamic vibration absorber and minimizing the total weight of the actuator for the head-up display.

An embodiment of the present disclosure provides an actuator for a head-up display, that is capable of dealing with low frequency vibrations by using a cantilever type dynamic vibration absorber and dampening vibrations and noise from the motor.

An embodiment of the present disclosure provides an actuator for a head-up display, that is capable of enhancing asssemblability by adjusting the coupling angle of a lower mount and the coupling position of the cantilever type dynamic vibration absorber.

The problems to be solved by the present disclosure are not limited to the above-mentioned ones, and other problems not mentioned herein may be clearly understood by those skilled in the art from the description below.

According to an embodiment of the present disclosure, a vibration absorbing apparatus for a head-up display driving module is capable of reducing the manufacturing cost by using a vibration damping part and a cantilever type dynamic vibration absorber and minimizing the total weight of the actuator for the head-up display.

According to an embodiment of the present disclosure, a vibration absorbing apparatus for a head-up display driving module is capable of dealing with low frequency vibrations by using a cantilever type dynamic vibration absorber and dampening vibrations and noise from the motor.

According to an embodiment of the present disclosure, a vibration absorbing apparatus for a head-up display driving module is capable of enhancing asssemblability by adjusting the coupling angle of a lower mount and the coupling position of the cantilever type dynamic vibration absorber.

The invention is defined by the appended claims.

### BRIEF DESCRIPTION OF THE DRAWINGS

Fig. 1 is a view showing an actuator for a head-up display according to an embodiment of the present disclosure.
Fig. 2 is an exploded perspective view showing an actuator for a head-up display according to an embodiment of the present disclosure.
Fig. 3 is a cross-sectional view taken along the line A-A' of FIG. 1, which shows a cantilever type dynamic vibration absorber according to a first embodiment of the present disclosure.
Fig. 4 is a cross-sectional view taken along the line A-A' of FIG. 1, which shows a cantilever type dynamic vibration absorber according to a second embodiment of the present disclosure.
Fig. 5 is a cross-sectional view taken along the line A-A' of FIG. 1, which shows a cantilever type dynamic vibration absorber according to a third embodiment of the present disclosure.
Fig. 6 is a perspective view showing another example of the coupling position of a bottom motor bracket according to an embodiment of the present disclosure.
Fig. 7 is a graph showing vibration reduction curves of dynamic vibration absorbers according to the conventional art and the present disclosure.

### DETAILED DESCRIPTION

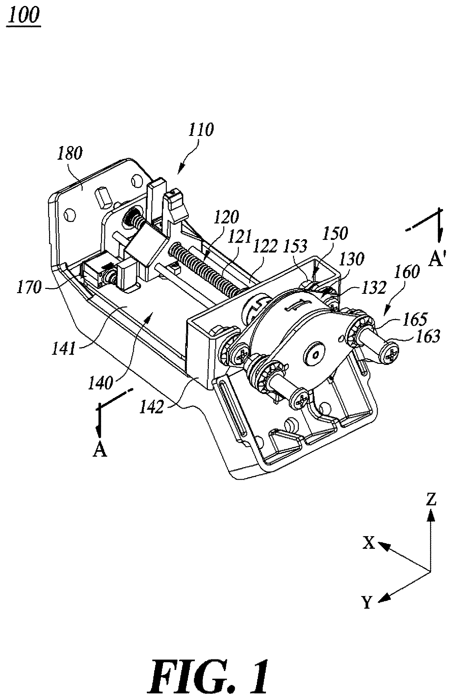

Fig. 1 is a view showing an actuator for a head-up display according to an embodiment of the present disclosure.

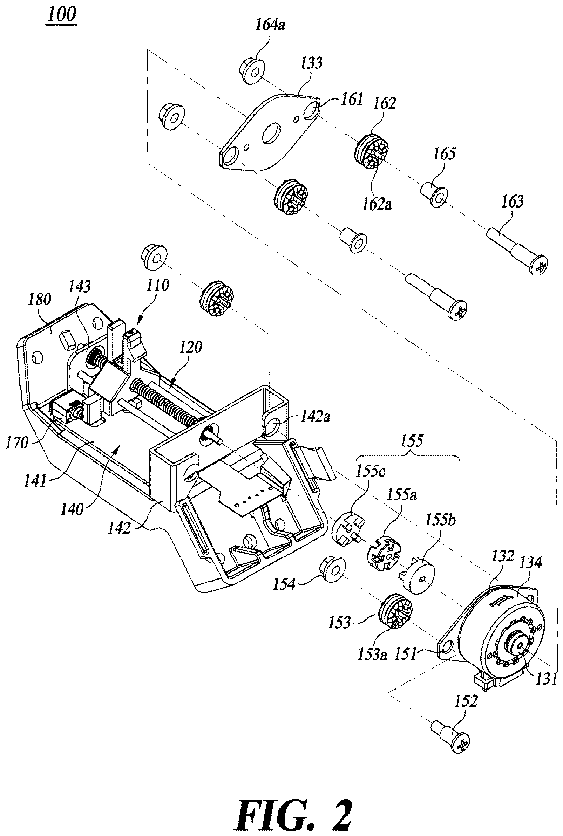

Fig. 2 is an exploded perspective view showing an actuator for a head-up display according to an embodiment of the present disclosure.

Referring to Fig. 1 and Fig. 2, an actuator 100 for a head-up display according to an embodiment of the present disclosure includes some or all of a link 110, a driving force transmission 120, a driver 130, a motor bracket 140, a top motor mount 132, a bottom motor mount 133, a vibration damping portion 150, and a cantilever type dynamic vibration absorber 160.

The link 110 may be attached to an aspheric mirror (not shown) and the driving force transmission 120. The link 110 may be configured to be attached to one end of the aspheric mirror. The link 110 may be disposed between the driving force transmission 120 and the aspheric mirror (not shown) to connect the components.

A spherical mount (not shown) may be formed on opposite ends of the aspheric mirror so as to allow the aspheric mirror (not shown) to rotate. The link 110 may interwork with the driving force transmission 120 and allow the aspheric mirror to rotate along the axis of rotation of a spherical mount (not shown).

The driving force transmission 120 may include some or all of a lead screw 121 and a guide shaft 122. The driving force transmission 120 may move in an arc on the other end of the link 110.

The lead screw 121 is configured to rotate by being connected and extending to the axis of rotation of the motor 131, and may be formed integrally with the driving force transmission 120 or formed as a detachable structure that can be assembled/dissembled. The lead screw 121 may cause the link 110 to move. A controller (e.g., a processor), not shown, may be configured to control or actuate the motor 131.

The guide shaft 122 may be formed between a lead screw mount 143 and a damper mount 142, spaced apart from and parallel to the lead screw 121. The guide shaft 122 may penetrate part of the link 110 and be attached to it. When the link 110 moves along the lead screw 121, the guide shaft 122 may guide the link 110 along the moving range so as to cause the link 110 to move without rotating.

The driver 130 may include some or all of a motor 131, the top motor mount 132, the bottom motor mount 133, and a body 134.

The motor 131 may be a DC motor, an AC motor, an induction motor, a synchronous motor, a step motor, a servo motor, a brushless motor, a linear motor, or a permanent magnet synchronous motor (PMSM).

The top motor mount 132 may be disposed to abut against a top surface of the motor 131. The top of the motor 131 refers to a portion that abuts against the axis of the motor 131. The top motor mount 132 may be formed in such a manner as to fully cover the top of the motor 131.

The top motor mount 132 may be attached to the damper mount 142 by using a first shoulder screw 152. Both ends of the top motor mount 132 may extend in a direction perpendicular to the axis of the motor 13 so as to be attached to the damper mount 142.

The bottom motor mount 133 may be disposed to abut against a bottom surface of the motor 131. The shape of the bottom motor mount 133 may correspond to the shape of the top motor mount 132. However, the shape of the bottom motor mount 133 is not limited to the shape of the top motor mount 132. The bottom motor mount 133 may be formed to fully cover the bottom of the motor 131.

Both ends of the bottom motor mount 133 may extend in a direction perpendicular to the axis of the motor 13 so as to be attached to the damper mount 142. The bottom motor mount 133 may be manufactured using a thin metal sheet.

The body 134 may be formed between the top motor mount 132 and the bottom motor mount 133. The body 134 may be configured to fully cover the side of the motor 131. The body 134 may be formed in such a manner as to be connected to the top motor mount 132. However, the shape of the body 134 is not limited to this.

The motor bracket 140 may include some or all of a housing mount 141, the damper mount 142, and the lead screw mount 143. The motor bracket 140 may be disposed on top of the motor 131. The motor bracket 140 may be attached to the driver 130 and support the driver 130.

The housing mount 141 may be disposed to abut against one surface of the housing 180. The housing 180 may fix the actuator for the head-up display in place in the head-up display. The housing 180 may include a plurality of bosses (not shown) and holes (not shown) for fixing the housing mount 141 in place.

The plurality of bosses (not shown) may determine the position where the housing mount 141 is attached to the housing 180. Housing holes (not shown) may be formed in one surface of the housing mount 141 so that tapping screws 181 penetrate therethrough. The tapping screws 181 may be fastened to the plurality of holes (not shown) formed in one surface of the housing 180 by penetrating through the housing holes (not shown).

A flexible cable 182 may be disposed between the housing 180 and the bracket of the motor 131. The flexible cable 182 refers to a conductive wire connected to the motor 131. The flexible cable 182 may be installed in such a manner as to be exposed to both sides, i.e., to the left and right.

A switch 170 may be disposed at one portion of the housing mount 141. The switch 170 may detect a point where the aspheric mirror reaches an operating limit.

The damper mount 142 may be disposed adjacent to the top motor mount 132. The damper mount 142 may be bent perpendicular to the housing mount 141. An open hole 142a may be formed in one surface of the damper mount 142 so that a first damper 153 is fitted and attached to it.

A lead screw 121 may penetrate one surface of the lead screw mount 143 and be attached to it. The lead screw mount 143 may be bent perpendicular to the housing mount 141.

The vibration damping part 150 may include some or all of a first through hole 151, the first shoulder screw 152, the first damper 153, a first nut 154, and a flexible coupling 155.

The first through hole 151 may be formed through one portion of either end of the top motor mount 132. The first shoulder screw 152 may penetrate through the first through hole 151.

The first damper 153 may be fitted and attached to the motor bracket 140 so as to absorb vibration from the motor 131. Specifically, it may be fitted and attached to the damper mount 142. The first damper 153 may damp the vibration of the motor 131 that passes through the top motor mount 132 and reduce noise produced from inside the actuator for the head-up display.

The first damper 153 may be disposed between the top motor mount 132 and the damper mount 142. The first damper 153 may include a first damper hole 153a that is formed through it, corresponding to the first through hole 151.

The first damper hole 153a may be formed through one side of the first damper 153 so that the first shoulder screw 152 penetrates through it. The first nut 154 may be coupled to the first shoulder screw 152 which has passed through the first through hole 151, the first damper hole 153a, and the open hole 142a.

The flexible coupling 155 may compensate for an eccentricity between the axis of rotation of the motor 131 and the axis of rotation of the lead screw 121. The flexible coupling 155 may have a first hub 155b and a second hub 155c which are coupled to opposite sides of a spacer 155a.

The axis of rotation of the motor 131 may be fitted and attached to the first hub 155b coupled to one side of the flexible coupling 155. The lead screw 121 may be fitted and attached to the second hub 155c coupled to the other side of the flexible coupling 155.

Even if the axis of rotation of the motor 131 and the axis of rotation of the lead screw 121 do not coincide with each other, the eccentricity between the axes can be compensated for by using the spacer 155a. The flexible coupling 155 according to an embodiment of the present disclosure may be an Oldham coupling, for example. Here, the Oldham coupling is used as a coupling for compensating for the eccentricity between the axes coupled to the two sides. However, the type of the flexible coupling 155 is not limited to this.

The cantilever type dynamic vibration absorber 160 may include a second through hole 161, a second damper 162, a dynamic vibration absorber male screw 163, and a second nut 164. The cantilever type dynamic vibration absorber 160 may be disposed on both ends of the bottom motor mount 133.

The second through hole 161 may be formed through one portion of either end of the bottom motor mount 133.

The second damper 162 may be fitted and attached to the bottom motor mount 133 so as to absorb vibration from the motor 131. The second damper 162 may damp the vibration of the motor 131 that passes through the bottom motor mount 133 and reduce noise generated from inside the actuator for the head-up display. The second damper 162 may include a second damper hole 162a that is formed through it, corresponding to the second through hole 161.

The dynamic vibration absorber screw 163 may penetrate at least a part of the second through-hole 161 and the second damper hole 162a. The dynamic vibration male screw 163 may be adjusted to a preset mass and a preset length so that the natural frequency of the motor 131 and a target frequency of the cantilever type dynamic vibration absorber 160 are calculated to be equal.

By adjusting the axial length of the dynamic vibration absorber male screw 163, the dynamic vibration absorber male screw 163 is cantilevered. The length of the dynamic vibration absorber male screw 163 may be determined based on the amplitude, frequency, etc. of vibrations produced from the motor 131. The length of the dynamic vibration absorber male screw 163 may be adjusted so that the natural frequency of the motor 131 and the natural frequency of the cantilever type dynamic vibration absorber 160 coincide with each other.

The second nut 164 may be coupled to the dynamic vibration absorber male screw 163 penetrating through the second through hole 161 and the second damper hole 162a.

The cantilever type dynamic vibration absorber 160 may be disposed in a position corresponding to the area where the vibration damping part 150 is disposed.

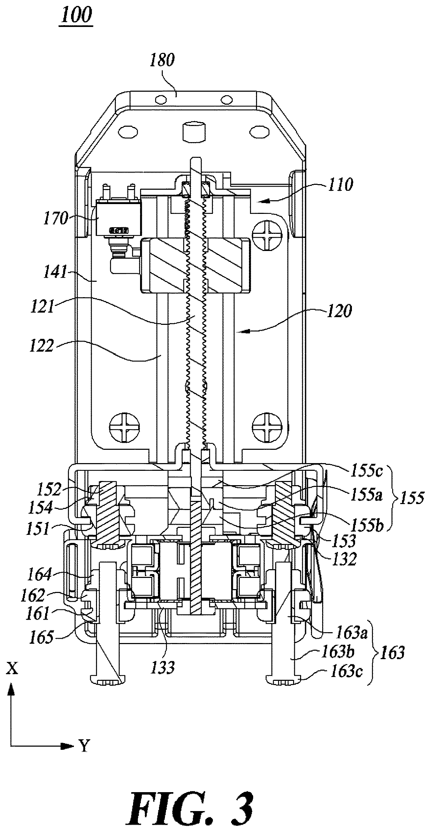

Fig. 3 is a cross-sectional view taken along the line A-A' of FIG. 1, which shows a cantilever type dynamic vibration absorber according to a first embodiment of the present disclosure.

Referring to Fig. 3, the cantilever-type dynamic vibration absorber 160 according to the first embodiment of the present disclosure may further include a flange bush 165 that at least partially penetrates the second through-hole 161 and the second damper hole 162a. A flange portion of the bush 165 may be configured to cover at least part of the top of the second damper 162. The force exerted on the flange portion may be distributed to the second damper 162, thereby increasing the overall compression force.

The dynamic vibration absorber male screw 163 according to the first embodiment of the present disclosure may include a first screw 163a, a first shank 163b, and a first head 163c.

The first screw 163a may penetrate the flange bush 165. The first screw 163a may be fastened to the second nut 164.

The first shank 163b may be formed by being connected to the first screw 163a. The first shank 163b may be formed to be larger in width than the first screw 163a along the outer diameter of the first screw 163a. The first shank 163b may extend toward the bottom of the motor 131. The length of the first shank 163b may be adjusted so that the natural frequency of the motor 131 and the natural frequency of the cantilever type dynamic vibration absorber 160 coincide with each other.

The first head 163c may be formed by being connected to the first shank 163b. The first head 163c may be formed to be larger in width than the first shank 163b along the outer diameter of the first shank 163b.

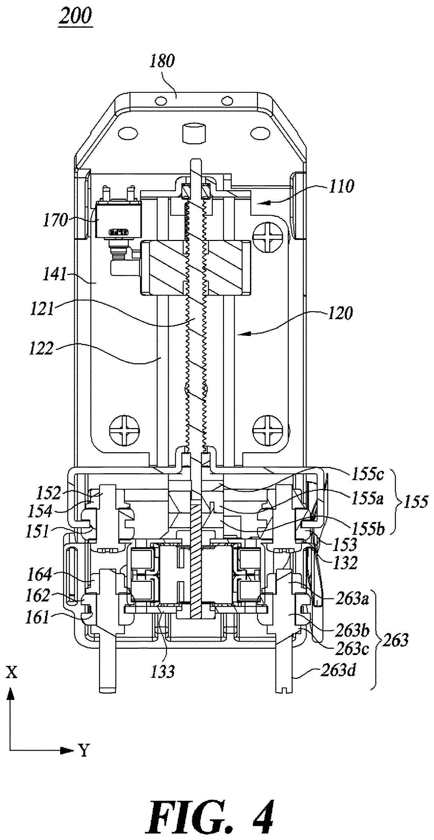

Fig. 4 is a cross-sectional view taken along the line A-A' of FIG. 1, which shows a cantilever type dynamic vibration absorber according to a second embodiment of the present disclosure. Here, descriptions that overlap with the descriptions of the actuator for the head-up display according to the embodiment in Figs. 1 and 2 will be omitted.

Referring to Fig. 4, the cantilever type dynamic vibration absorber 160 according to the second embodiment of the present disclosure may include some or all of a second screw 263a, a second shank 263b, a first shoulder 263c, and a second head 263d.

The second screw 263a may be fastened to the second nut 164. The second shank 263b may be formed by being connected to the second screw 263a. The second shank 263b may be formed to be larger in width than the second screw 263a along the outer diameter of the second screw 263a. The second shank 263b may penetrate at least part of the second through-hole 161 and the second damper hole 162a.

The first shoulder 263c may be formed by being connected to the second screw 263a. The first shoulder 263c may be formed to be larger in width than the second shank 263b along the outer diameter of the second shank 263b. The first shoulder 263c may perform the same role as the flange portion of the flange bush.

The second head 263d may be formed by being connected to the first shoulder 263c. The second head 263d may be formed to be smaller in width than the first shoulder 263c along the inner diameter of the first shoulder 263c. The second head 263d may extend toward the bottom of the motor 131. The length of the second head 263d may be adjusted so that the natural frequency of the motor 131 and the natural frequency of the cantilever type dynamic vibration absorber 160 coincide with each other.

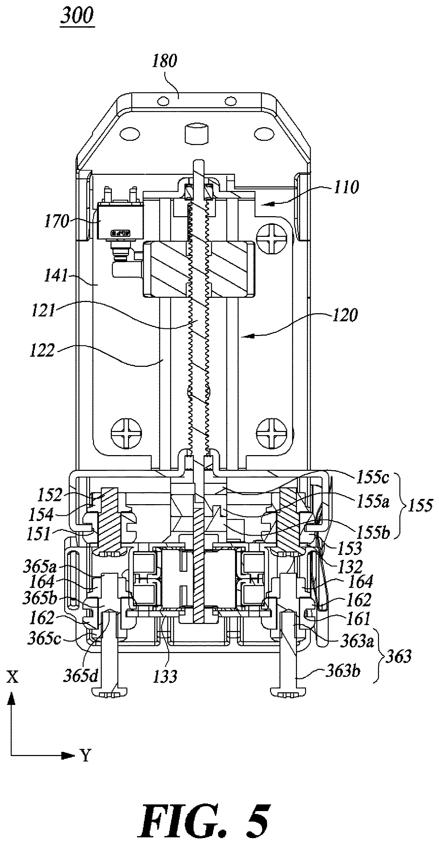

Fig. 5 is a cross-sectional view taken along the line A-A' of FIG. 1, which shows a cantilever type dynamic vibration absorber according to a third embodiment of the present disclosure. Here, descriptions that overlap with the descriptions of the actuator for the head-up display according to the embodiment in Figs. 1 and 2 will be omitted.

The cantilever type dynamic vibration absorber 160 according to the third embodiment of the present disclosure may include a second shoulder screw 365 that penetrates through the second through hole 161, the second damper hole 162a, and the second nut 164.

The second shoulder screw 365 may include some or all of a third screw 365a, a second shoulder 365b, and a third head 365c.

The third screw 365a may be fastened to the second nut 164. The second shoulder 365b may be formed by being connected to the third screw 365a. The second shoulder 365b may be formed to be larger in width than the third screw 365a along the outer diameter of the third screw 365a. The second shoulder 365b may penetrate at least part of the second through-hole 161 and the second damper hole 162a.

The third head 365c may be formed by being connected to the second shoulder 365b. The third head 365c may be formed to be larger in width than the second shoulder 365b along the outer diameter of the second shoulder 365b.

The second shoulder screw 365 may include a tap hole 365d that penetrates the third head 365c and at least part of the second shoulder 365b.

The dynamic vibration absorber male screw 163 according to the third embodiment of the present disclosure may include some or all of a fourth screw 163a and a fourth head 363b.

The fourth screw 363a may penetrate through at least part of the tap hole 365d and be coupled to the second shoulder screw 365. The fourth screw 363a may extend toward the bottom of the motor 131. The length of the fourth head 363b may be adjusted so that the natural frequency of the motor 131 and the natural frequency of the cantilever type dynamic vibration absorber 160 coincide with each other.

The fourth head 363b may be formed by being connected to the fourth screw 363a. The fourth head 363b may be formed to be larger in width than the fourth screw 363a along the outer diameter of the fourth screw 363a.

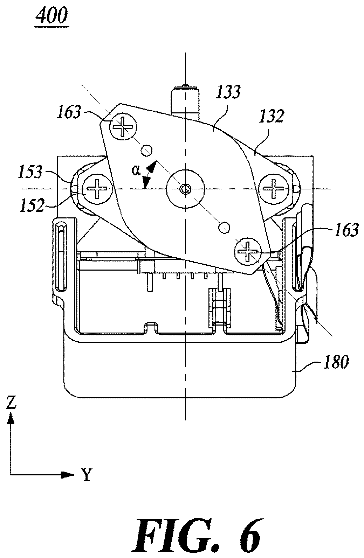

Fig. 6 is a perspective view showing another example of the coupling position of a bottom motor bracket according to an embodiment of the present disclosure. Here, descriptions that overlap with the descriptions of the actuator for the head-up display according to the embodiment in Figs. 1 and 2 will be omitted.

Referring to Fig. 6, the bottom motor mount 133 may be rotated at a certain angle with respect to the top motor mount 132. Once rotated at a certain angle, the bottom motor mount 133 may be disposed at the bottom of the motor 131, thereby preventing physical interference with the vibration damping part 150.

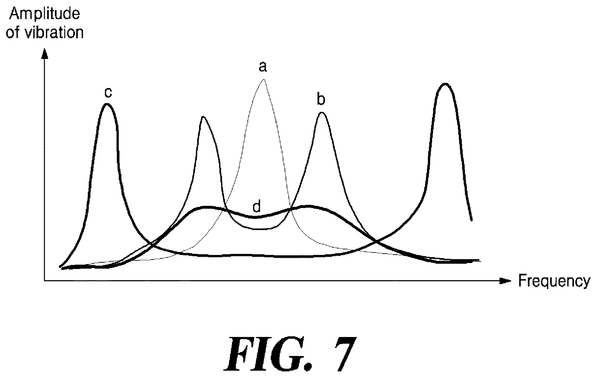

Fig. 7 is a graph showing vibration reduction curves of dynamic vibration absorbers according to the conventional art and the present disclosure.

The line a of Fig. 7 represents a vibration reduction curve for a head-up display in which the vibration damping part 150 and the cantilever type dynamic vibration absorber 160 are not installed. The line b of Fig. 7 represents a vibration reduction curve where only the cantilever type dynamic vibration absorber 160 is installed. In the line a, the amplitude of vibration varies widely with frequency, and the effect of vibration reduction disappears as the operation of the main structure goes into resonance. In the line b, the cantilever type dynamic vibration absorber 160 reduces some of the vibration but the vibration level is still high.

The line c of Fig. 7 represents a vibration reduction curve obtained by increasing the weight of the mass body of the cantilever type dynamic vibration absorber 160. The line d of Fig. 7 represents a vibration reduction curve obtained when a cantilever type dynamic vibration absorber 160 having a vibration damping part 160 and dampers is installed, as in the embodiments of the present disclosure. In the line c, a shift of the resonant frequency away from the operation range took place, and, as a result, the amplitude of vibration in the operation range can be reduced; however, there still remains issues concerning the safety of the cantilever type dynamic vibration absorber 160 and size limitations depending on the installation position.

The line d shows a significant decrease in vibration response at two resonant frequencies, which may result in an overall decrease in the amplitude of vibration. Moreover, the load on the operation range can be reduced, and the safety of the cantilever type dynamic vibration absorber can be improved.

## Claims

1. An actuator (100) for a head-up display, the actuator (100) comprising:
a link (110) configured to be attached to one end of an aspheric mirror;
a driving force transmission (120) including a lead screw (121) configured to move the link (110);
a driver (130) configured to allow the lead screw (121) to rotate along the axis of rotation of a motor (131) as the motor (131) is driven;
a motor bracket (140) disposed on top of the motor (131) and attached to the driver (130) to support the driver (130);
a top motor mount (132) disposed on the top of the motor (131);
a bottom motor mount (133) disposed on the bottom of the motor (131);
a vibration damping part (150) disposed between the top motor mount (132) and the motor bracket (140), and configured to absorb or dampen vibration from the motor (131); and
a cantilever type dynamic vibration absorber (160) disposed on both ends of the bottom motor mount (133), and configured to absorb vibration from the motor (131).

2. The actuator (100) of claim 1, wherein the vibration damping part (150) includes:
a first through hole (151) formed through one portion of either ends of the top motor mount (132);
a first damper (153) fitted and attached to the motor bracket (140) to absorb vibration from the motor (131), the first damper (153) including a first damper hole (153a) corresponding to the first through hole (151);
a first shoulder screw (152) that penetrates through the first through hole (151), the first damper hole (153a), and the motor bracket (140); and
a first nut (154) coupled to the first shoulder screw (152).

3. The actuator (100) of claim 1 or 2, wherein the cantilever type dynamic vibration absorber (160) includes:
a second through hole (161) formed through one portion of either ends of the bottom motor mount (133);
a second damper (162) fitted and attached to the bottom motor mount (133) to absorb vibration from the motor (131), the second damper (162) including a second damper hole (162a) corresponding to the second through hole (161);
a dynamic vibration absorber male screw (163) that penetrates at least part of the second through hole (161) and the second damper hole (162a); and
a second nut (164) coupled to the dynamic vibration absorber male screw (163).

4. The actuator (100) of any one of claims 1 to 3, further comprising
the motor (131); and
a controller configured to control the motor (131).

5. The actuator (100) of claim 4, wherein the dynamic vibration absorber male screw (163) is adjusted to a preset mass and a preset length so that a natural frequency of the motor (131) and a target frequency of the cantilever type dynamic vibration absorber (160) are calculated to be equal.

6. The actuator (100) of any one of claims 3 to 5, wherein the cantilever type dynamic vibration absorber (160) further includes a flange bush (165) that penetrates at least part of the second through hole (161) and the second damper hole (162a), and
wherein the dynamic vibration absorber male screw (163) includes:
a first screw (163a) that penetrates the flange bush (165) and is fastened to the second nut (164);
a first shank (163b) that is formed to be larger in width than the first screw (163a) along the outer diameter of the first screw (163a), the first shank (163b) extending toward the bottom of the motor (131); and
a first head (163c) formed to be larger in width than the first shank (163b) along the outer diameter of the first shank (163b).

7. The actuator (100) of any one of claims 3 to 6, wherein the dynamic vibration absorber male screw (163) includes:
a second screw (263a) fastened to the second nut (164);
a second shank (263b) formed to be larger in width than the second screw (263a) along the outer diameter of the second screw (263a), and that penetrates through the second through hole (161) and the second damper hole (162a);
a first shoulder (263c) formed to be larger in width than the second shank (263b) along the outer diameter of the second shank (263b); and
a second head (263d) formed to be smaller in width than the first shoulder (263c) along the inner diameter of the first shoulder (263c), and that extends toward the bottom of the motor (131).

8. The actuator (100) of any one of claims 3 to 7, wherein the cantilever type dynamic vibration absorber (160) further includes a second shoulder screw (365) that penetrates through the second through hole (161), the second damper hole (162a), and the second nut (164),
wherein the second shoulder screw (365) includes:
a third screw (365a) fastened to the second nut (164);
a second shoulder (365b) formed to be larger in width than the third screw (365a) along the outer diameter of the third screw (365a), and that penetrates through the second through hole (161) and the second damper hole (162a); and
a third head (365c) formed to be larger in width than the second shoulder (365b) along the outer diameter of the second shoulder (365b).

9. The actuator (100) of claim 8, wherein the second shoulder screw (365) includes a tap hole (365d) that penetrates the third head (365c) and at least part of the second shoulder (365b), and
wherein the dynamic vibration absorber male screw (163) includes:
a fourth screw (363a) coupled to the tap hole (365d) and extends toward the bottom of the motor (131); and
a fourth head (363b) formed to be larger in width than the fourth screw (363a) along the outer diameter of the fourth screw (363a).

10. The actuator (100) of any one of claims 1 to 9, wherein the cantilever type dynamic vibration absorber (160) is disposed at a position corresponding to the area where the vibration damping part (150) is disposed.

11. The actuator (100) of any one of claims 1 to 10, wherein the bottom motor mount (133) is rotated at a predetermined angle with respect to the top motor mount (132) and disposed at the bottom of the motor (131), to prevent physical interference with the vibration damping part (150).

12. The actuator (100) of any one of claims 1 to 11, wherein at least one of:
the vibration damping part (150) is further configured to absorb noise from the motor (131);
the cantilever type dynamic vibration absorber (160) is further configured to absorb noise from the motor (131); or
a combination thereof.

## Patentansprüche

1. Aktuator (100) für eine Head-up-Anzeige, wobei der Aktuator (100) umfasst:
ein Verbindungsglied (110), das dazu eingerichtet ist, an einem Ende eines asphärischen Spiegels angebracht zu werden;
eine Antriebskraftübertragungseinrichtung (120), die eine Gewindespindel (121) umfasst, die dazu eingerichtet ist, das Verbindungsglied (110) zu bewegen;
einen Antrieb (130), der dazu eingerichtet ist, zu ermöglichen, dass sich die Gewindespindel (121) um die Drehachse eines Motors (131) dreht, wenn der Motor (131) angetrieben wird;
einen Motorbügel (140), der auf der Oberseite des Motors (131) angeordnet und an dem Antrieb (130) angebracht ist, um den Antrieb (130) zu stützen;
eine obere Motorhalterung (132), die auf der Oberseite des Motors (131) angeordnet ist;
eine untere Motorhalterung (133), die auf der Unterseite des Motors (131) angeordnet ist;
ein Schwingungsdämpfungsteil (150), das zwischen der oberen Motorhalterung (132) und dem Motorbügel (140) angeordnet und dazu eingerichtet ist, Schwingungen von dem Motor (131) zu absorbieren oder zu dämpfen; und
einen dynamischen Schwingungstilger vom Kragarmtyp (160), der an beiden Enden der unteren Motorhalterung (133) angeordnet und dazu eingerichtet ist, Schwingungen von dem Motor (131) zu absorbieren.

2. Aktuator (100) nach Anspruch 1, wobei das Schwingungsdämpfungsteil (150) umfasst:
ein erstes Durchgangsloch (151), das durch einen Abschnitt eines der Enden der oberen Motorhalterung (132) ausgebildet ist;
einen ersten Dämpfer (153), der in den Motorbügel (140) eingepasst und daran angebracht ist, um Schwingungen von dem Motor (131) zu absorbieren, wobei der erste Dämpfer (153) ein erstes Dämpferloch (153a) umfasst, das dem ersten Durchgangsloch (151) entspricht;
eine erste Schulterschraube (152), die das erste Durchgangsloch (151), das erste Dämpferloch (153a) und den Motorbügel (140) durchdringt; und
eine erste Mutter (154), die mit der ersten Schulterschraube (152) gekoppelt ist.

3. Aktuator (100) nach Anspruch 1 oder 2, wobei der dynamische Schwingungstilger vom Kragarmtyp (160) umfasst:
ein zweites Durchgangsloch (161), das durch einen Abschnitt eines der Enden der unteren Motorhalterung (133) ausgebildet ist;
einen zweiten Dämpfer (162), der in die untere Motorhalterung (133) eingepasst und daran angebracht ist, um Schwingungen von dem Motor (131) zu absorbieren, wobei der zweite Dämpfer (162) ein zweites Dämpferloch (162a) umfasst, das dem zweiten Durchgangsloch (161) entspricht;
eine Außengewindeschraube (163) des dynamischen Schwingungstilgers, die mindestens einen Teil des zweiten Durchgangslochs (161) und des zweiten Dämpferlochs (162a) durchdringt; und
eine zweite Mutter (164), die mit der Außengewindeschraube (163) des dynamischen Schwingungstilgers gekoppelt ist.

4. Aktuator (100) nach einem der Ansprüche 1 bis 3, ferner umfassend
den Motor (131); und
eine Steuerung, die dazu eingerichtet ist, den Motor (131) zu steuern.

5. Aktuator (100) nach Anspruch 4, wobei die Außengewindeschraube (163) des dynamischen Schwingungstilgers auf eine voreingestellte Masse und eine voreingestellte Länge eingestellt ist, sodass eine Eigenfrequenz des Motors (131) und eine Zielfrequenz des dynamischen Schwingungstilgers vom Kragarmtyp (160) als gleich berechnet werden.

6. Aktuator (100) nach einem der Ansprüche 3 bis 5, wobei der dynamische Schwingungstilger vom Kragarmtyp (160) ferner eine Flanschbuchse (165) umfasst, die mindestens einen Teil des zweiten Durchgangslochs (161) und des zweiten Dämpferlochs (162a) durchdringt, und
wobei die Außengewindeschraube (163) des dynamischen Schwingungstilgers umfasst:
eine erste Schraube (163a), die die Flanschbuchse (165) durchdringt und an der zweiten Mutter (164) befestigt ist;
einen ersten Schaft (163b), der entlang des Außendurchmessers der ersten Schraube (163a) mit einer größeren Breite als die erste Schraube (163a) ausgebildet ist, wobei sich der erste Schaft (163b) zur Unterseite des Motors (131) hin erstreckt; und
einen ersten Kopf (163c), der entlang des Außendurchmessers des ersten Schafts (163b) mit einer größeren Breite als der erste Schaft (163b) ausgebildet ist.

7. Aktuator (100) nach einem der Ansprüche 3 bis 6, wobei die Außengewindeschraube (163) des dynamischen Schwingungstilgers umfasst:
eine zweite Schraube (263a), die an der zweiten Mutter (164) befestigt ist;
einen zweiten Schaft (263b), der entlang des Außendurchmessers der zweiten Schraube (263a) mit einer größeren Breite als die zweite Schraube (263a) ausgebildet ist und das zweite Durchgangsloch (161) und das zweite Dämpferloch (162a) durchdringt;
eine erste Schulter (263c), die entlang des Außendurchmessers des zweiten Schafts (263b) mit einer größeren Breite als der zweite Schaft (263b) ausgebildet ist; und
einen zweiten Kopf (263d), der entlang des Innendurchmessers der ersten Schulter (263c) mit einer geringeren Breite als die erste Schulter (263c) ausgebildet ist und sich zur Unterseite des Motors (131) hin erstreckt.

8. Aktuator (100) nach einem der Ansprüche 3 bis 7, wobei der dynamische Schwingungstilger vom Kragarmtyp (160) ferner eine zweite Schulterschraube (365) umfasst, die das zweite Durchgangsloch (161), das zweite Dämpferloch (162a) und die zweite Mutter (164) durchdringt,
wobei die zweite Schulterschraube (365) umfasst:
eine dritte Schraube (365a), die an der zweiten Mutter (164) befestigt ist;
eine zweite Schulter (365b), die entlang des Außendurchmessers der dritten Schraube (365a) mit einer größeren Breite als die dritte Schraube (365a) ausgebildet ist und das zweite Durchgangsloch (161) und das zweite Dämpferloch (162a) durchdringt; und
einen dritten Kopf (365c), der entlang des Außendurchmessers der zweiten Schulter (365b) mit einer größeren Breite als die zweite Schulter (365b) ausgebildet ist.

9. Aktuator (100) nach Anspruch 8, wobei die zweite Schulterschraube (365) eine Gewindebohrung (365d) umfasst, die den dritten Kopf (365c) und mindestens einen Teil der zweiten Schulter (365b) durchdringt, und
wobei die Außengewindeschraube (163) des dynamischen Schwingungstilgers umfasst:
eine vierte Schraube (363a), die mit der Gewindebohrung (365d) gekoppelt ist und sich zur Unterseite des Motors (131) hin erstreckt; und
einen vierten Kopf (363b), der entlang des Außendurchmessers der vierten Schraube (363a) mit einer größeren Breite als die vierte Schraube (363a) ausgebildet ist.

10. Aktuator (100) nach einem der Ansprüche 1 bis 9, wobei der dynamische Schwingungstilger vom Kragarmtyp (160) an einer Position angeordnet ist, die dem Bereich entspricht, in dem das Schwingungsdämpfungsteil (150) angeordnet ist.

11. Aktuator (100) nach einem der Ansprüche 1 bis 10, wobei die untere Motorhalterung (133) in Bezug auf die obere Motorhalterung (132) um einen vorbestimmten Winkel gedreht und an der Unterseite des Motors (131) angeordnet ist, um eine physikalische Beeinträchtigung durch das Schwingungsdämpfungsteil (150) zu verhindern.

12. Aktuator (100) nach einem der Ansprüche 1 bis 11, wobei mindestens eines der Folgenden vorgesehen ist:
das Schwingungsdämpfungsteil (150) ist ferner dazu eingerichtet, Geräusche von dem Motor (131) zu absorbieren;
der dynamische Schwingungstilger vom Kragarmtyp (160) ist ferner dazu eingerichtet, Geräusche von dem Motor (131) zu absorbieren; oder
eine Kombination davon.

## Revendications

1. Actionneur (100) pour affichage tête haute, l'actionneur (100) comprenant:
un élément de liaison (110) conçu pour être fixé à une extrémité d'un miroir asphérique;
un mécanisme de transmission de force d'entraînement (120) comprenant une vis sans fin (121) conçue pour déplacer l'élément de liaison (110) ;
un entraînement (130) conçu pour permettre à la vis sans fin (121) de tourner selon l'axe de rotation d'un moteur (131) lorsque le moteur est mis en marche;
un support moteur (140) disposé au-dessus du moteur (131) et fixé à l'entraînement (130) afin de soutenir l'entraînement;
un support moteur supérieur (132) disposé sur la partie supérieure du moteur (131);
un support moteur inférieur (133) disposé sur le fond du moteur (131);
une partie d'amortissement de vibrations (150) disposée entre le support moteur supérieur (132) et le support moteur (140), et conçu pour absorber ou amortir les vibrations provenant du moteur (131); et
un amortisseur de vibrations dynamique de type en porte-à-faux (160) disposé aux deux extrémités du support moteur inférieur (133) et conçu pour absorber les vibrations provenant du moteur (131).

2. Actionneur (100) selon la revendication 1, dans lequel la partie d'amortissement de vibrations (150) comprend:
un premier trou traversant (151) formé dans l'une des parties de l'une ou l'autre des extrémités du support moteur supérieur (132);
un premier amortisseur (153) monté et fixé sur le support moteur (140) afin d'absorber les vibrations provenant du moteur (131), le premier amortisseur (153) comportant un premier trou d'amortisseur (153a) correspondant au premier trou traversant (151);
une première vis à épaulement (152) qui traverse le premier trou traversant (151), le premier trou d'amortisseur (153a) et le support moteur (140); et
un premier écrou (154) fixé à la première vis à épaulement (152).

3. Actionneur (100) selon la revendication 1 ou 2, dans lequel l'amortisseur de vibrations dynamique de type en porte-à-faux (160) comprend:
un deuxième trou traversant (161) formé dans l'une partie de l'une ou l'autre des extrémités du support moteur inférieur (133);
un deuxième amortisseur (162) monté et fixé au support moteur inférieur (133) afin d'absorber les vibrations provenant du moteur (131), le deuxième amortisseur (162) comportant un deuxième trou d'amortisseur (162a) correspondant au deuxième trou traversant (161);
une vis mâle (163) d'amortisseur de vibrations dynamique, qui traverse au moins une partie du deuxième trou traversant (161) et du deuxième trou d'amortisseur (162a); et
un deuxième écrou (164) relié à la vis mâle (163) d'amortisseur de vibrations dynamique.

4. Actionneur (100) selon l'une quelconque des revendications 1 à 3, comprenant en outre
le moteur (131); et
un organe de commande conçu pour commander le moteur (131).

5. Actionneur (100) selon la revendication 4, dans lequel la vis mâle (163) d'amortisseur de vibrations dynamique est réglée à une masse et à une longueur prédéfinies de telle sorte que la fréquence propre du moteur (131) et la fréquence cible de l'amortisseur de vibrations dynamique de type en porte-à-faux (160) soient calculées pour qu'elles soient égales.

6. Actionneur (100) selon l'une quelconque des revendications 3 à 5, dans lequel l'amortisseur de vibrations dynamique de type en porte-à-faux (160) comprend en outre une bague à collerette (165) qui traverse au moins une partie du deuxième trou traversant (161) et du deuxième trou d'amortisseur (162a), et
dans lequel la vis mâle (163) d'amortisseur de vibrations dynamique comprend:
une première vis (163a) qui traverse la bague à collerette (165) et qui est vissée sur le deuxième écrou (164);
une première tige (163b) dont la largeur est supérieure à celle de la première vis (163a) le long du diamètre extérieur de la première vis (163a), la première tige (163b) s'étendant vers le bas du moteur (131); et
une première tête (163c) dont la largeur est supérieure à celle de la première tige (163b) le long du diamètre extérieur de la première tige (163b).

7. Actionneur (100) selon l'une quelconque des revendications 3 à 6, dans lequel la vis mâle (163) d'amortisseur de vibrations dynamique comprend:
une deuxième vis (263a) vissée sur le deuxième écrou (164);
une deuxième tige (263b) dont la largeur est supérieure à celle de la deuxième vis (263a) le long du diamètre extérieur de la deuxième vis (263a), et qui traverse le deuxième trou traversant (161) et le deuxième trou d'amortisseur (162a);
un premier épaulement (263c) dont la largeur est supérieure à celle de la deuxième tige (263b) le long du diamètre extérieur de la deuxième tige (263b); et
une deuxième tête (263d) dont la largeur est inférieure à celle du premier épaulement (263c) le long du diamètre intérieur du premier épaulement (263c), et qui s'étend vers le bas du moteur (131).

8. Actionneur (100) selon l'une quelconque des revendications 3 à 7, dans lequel l'amortisseur de vibrations dynamique de type en porte-à-faux (160) comprend en outre une deuxième vis à épaulement (365) qui traverse le deuxième trou traversant (161), le deuxième trou d'amortisseur (162a) et le deuxième écrou (164),
dans lequel la deuxième vis à épaulement (365) comprend:
une troisième vis (365a) vissée au deuxième écrou (164);
un deuxième épaulement (365b) dont la largeur est supérieure à celle de la troisième vis (365a) le long du diamètre extérieur de la troisième vis (365a), et qui traverse le deuxième trou traversant (161) et le deuxième trou d'amortisseur (162a); et
une troisième tête (365c) dont la largeur est supérieure à celle du deuxième épaulement (365b) le long du diamètre extérieur du deuxième épaulement (365b).

9. Actionneur (100) selon la revendication 8, dans lequel la deuxième vis à épaulement (365) comporte un trou taraudé (365d) qui traverse la troisième tête (365c) et au moins une partie du deuxième épaulement (365b), et
dans lequel la vis mâle (163) d'amortisseur de vibrations dynamique comprend:
une quatrième vis (363a) vissée dans le trou de prélèvement (365d) et s'étendant vers le bas du moteur (131); et
une quatrième tête (363b) dont la largeur est supérieure à celle de la quatrième vis (363a) le long du diamètre extérieur de la quatrième vis (363a).

10. Actionneur (100) selon l'une quelconque des revendications 1 à 9, dans lequel l'amortisseur de vibrations dynamique de type en porte-à-faux (160) est disposé à un emplacement correspondant à la zone où est disposée la partie d'amortissement des vibrations (150).

11. Actionneur (100) selon l'une quelconque des revendications 1 à 10, dans lequel le support moteur inférieur (133) est tourné selon un angle prédéterminé par rapport au support moteur supérieur (132) et est disposé au niveau du fond du moteur (131), afin d'éviter toute interférence physique avec la partie d'amortissement de vibrations (150).

12. Actionneur (100) selon l'une quelconque des revendications 1 à 11, dans lequel
l'élément d'amortissement de vibrations (150) est en outre conçu pour absorber le bruit provenant du moteur (131); et/ou
l'amortisseur de vibrations dynamique de type en porte-à-faux (160) est en outre conçu pour absorber le bruit provenant du moteur (131); ou leur combinaison.
